# FASCICULE DE BREVET EUROPEEN

(11) **EP 1 328 584 B1**
(45) Date de publication et mention de la délivrance du brevet: **25.10.2006**
(21) Numéro de dépôt: 01958191.7
(22) Date de dépôt: 27.07.2001
(51) Int. Cl.: C08L 79/04, C08G 73/06, C08L 83/10

(54) **NOUVELLE COMPOSITION ELASTOMERE THERMODURCISSABLE A BASE DE POLYCYANURATE MODIFIE A TENUE THERMIQUE AMELIOREE**
HITZEHÄRTBARE ELASTOMERZUSAMMENSETZUNG AUF BASIS VON MODIFIZIERTEM POLYCYANURAT MIT VERBESSERTER HITZEBESTÄNDIGKEIT
NOVEL THERMOSETTING ELASTOMER COMPOSITION BASED ON MODIFIED POLYCYANURATE WITH IMPROVED THERMAL RESISTANCE

(30) Priorité: 28.07.2000 FR 0009934
(43) Date de publication de la demande: 23.07.2003
(73) Titulaire: Merylithe, 73420 Mery (FR)
(72) Inventeur: MECHIN, Françoise, F-69006 Lyon (FR); PASCAULT, Jean-Pierre, F-69100 Villeurbanne (FR); LAMBOUR, Stéphanie, F-69003 Lyon (FR); FERRAND, Jacques, F-45390 Briarres-sur-Essonne (FR)
(74) Mandataire: Ahner, Francis
(86) Numéro de dépôt international: PCT/FR2001/002472
(87) Numéro de publication internationale: WO 2002/010282

(56) Documents cités:
- EP-A- 0 311 341
- EP-A- 0 816 438
- BARTHELEMY L ET AL: "MODIFICATION OF POLYCYANURATE NETWORKS WITH PROTIC ADDITIVES BASED ON POLYDIMETHYLSILOXANE" MACROMOLECULAR SYMPOSIA,DE,WILEY VCH, WEINHEIM, vol. 122, 1 août 1997 (1997-08-01), pages 167-172, XP000727267 ISSN: 1022-1360
- PATENT ABSTRACTS OF JAPAN vol. 1995, no. 09, 31 octobre 1995 (1995-10-31) & JP 07 149952 A (TORAY IND INC), 13 juin 1995 (1995-06-13)

## Description

La présente invention concerne les compositions d'élastomères ayant une bonne tenue thermique. Elle concerne en particulier des polycyanurates modifiés ayant une tenue thermique améliorée.

Il existe différents types de polymères élastomères ayant de bonnes propriétés mécaniques statiques en traction. En particulier les polyuréthannes sont largement utilisés (par exemple l'Adilithe® IV-95 ou le C36/H12MDI/3-DCM de la société SAMI). Ces types de polymères ont certes des valeurs de contraintes à la rupture de l'ordre de 35 à 40 MPa et de déformations à la rupture de l'ordre de 400% à température ambiante, mais ces propriétés se dégradent rapidement et irréversiblement à haute température (supérieure à 130°C) jusqu'à perdre plus de 60% de leur valeur initiale. Ils ne sont donc pas stables thermiquement.
D'autres élastomères sont stables thermiquement mais possèdent alors différents désavantages :
- les silicones type Shin Etsu® KE 24 ont des propriétés mécaniques trop faibles.
- les époxys sont trop rigides.
- les fluoroélastomères type Viton® sont trop difficiles à mettre en oeuvre en particulier pour réaliser des revêtements de faible épaisseur.
Les mélanges de cyanates avec des composés à hydrogène mobile, en particulier les polyols, de façon à obtenir des polycyanurates modifiés ont été peu étudiés.

De façon surprenante il a été découvert que certains polycyanurates modifiés selon la présente invention possédaient une bonne tenue thermique et une facilité de mise en oeuvre tout en n'étant ni trop fragiles, ni trop rigides.

La présente invention concerne donc une nouvelle composition élastomère thermodurcissable à base de polycyanurate modifié à tenue thermique améliorée caractérisée en ce qu'elle est susceptible d'être obtenue par un procédé de polymérisation à l'aide d'un catalyseur (D) d'un mélange comprenant :
(A) un cyanate,
(B) un copolymère à bloc constitué par
   - a) au moins un bloc central (B1) non miscible avec le cyanate et suffisamment long pour donner à la composition obtenue un caractère élastomère et
   - b) au moins deux blocs terminaux (B2) situés de chaque côté du bloc central et comportant des groupes réactifs avec le cyanate, chacun desdits blocs (B2) étant suffisamment longs pour être miscibles avec le cyanate et
(C) une charge minérale réactive avec le cyanate
   dans des proportions telles que le rapport r soit au moins égal à 5, mais ne soit pas trop élevé pour éviter l'inversion de phase et avantageusement soit inférieur à 10,
   ledit procédé comprenant les étapes de :
   I- mélange de (A), (B), (C) et (D) jusqu'à l'obtention d'un mélange homogène à une température supérieure à la température de fusion de (A) et de (B) mais inférieure à environ 130°C
   II- polymérisation du mélange à une température comprise entre environ 130 et environ 170°C,
   III- post-cuisson du mélange polymérisé à une température supérieure ou égale à environ 200°C pour compléter la réaction
   et en ce que les valeurs de Δσᵣᵤₚₜ et de Δεᵣᵤₚₜ de la composition ainsi obtenue sont inférieures ou égales à environ ±30%.

Par le terme de « caractère élastomère d'une composition», on entend au sens de la présente invention toute composition semi-rigide ayant des valeurs d'allongement à la rupture d'au moins environ 30%, cet allongement étant réversible à température ambiante.

Par le terme de « suffisamment long », on entend au sens de la présente invention :
- pour les blocs B1, une masse molaire en nombre Mn d'au moins environ 1000 g/mol
- pour les blocs B2, une masse molaire en nombre Mn d'au moins environ 500g/mol

Par le terme « d'inversion de phase », on entend au sens de la présente invention le passage d'une phase où la matrice polymère est essentiellement constituée par le copolymère bloc (B) à une phase où la matrice polymère est essentiellement constituée par le cyanate (A).

Par le terme de « charge minérale réactive avec le cyanate », on entend au sens de la présente invention, toute charge minérale portant des groupes réactifs avec le cyanate. Des exemples de tels groupes sont les groupes hydroxyle ou époxy. Des exemples de charge minérale réactive avec le cyanate selon l'invention sont en particulier l'alumine fonctionnalisée hydroxyle ou encore les alumino-silicates et autres silicates. Avantageusement, la charge (C) est de la silice fonctionnalisée hydroxyle, de préférence de la silice aérosil ® 150 ayant les caractéristiques suivantes :
► taille des particules entre 7 et 40 nm
► surface spécifique = 150 m²/g
► densité = 2,2 g/cm³
► 3 groupes SiOH/nm²

Par le terme de « rapport r », on entend au sens de la présente invention le rapport du nombre de groupes OCN présents dans la composition de départ avant réaction par le nombre de groupes réactifs avec le cyanate présents dans la composition de départ avant réaction. Ces groupes réactifs avec le cyanate peuvent en particulier provenir du copolymère, de la charge réactive et/ou du catalyseur. Les groupes OCN proviennent en général du cyanate (A).

Par le terme de « Δσᵣᵤₚₜ », on entend au sens de la présente invention la mesure de la variation entre la valeur de la contrainte à la rupture mesurée à 110°C au temps t=0 juste après la polymérisation et celle mesurée à 110°C au temps t=10 jours après un vieillissement à 160°C.
Par le terme de « Δεᵣᵤₚₜ », on entend au sens de la présente invention la mesure de la variation entre la valeur de l'allongement à la rupture mesurée à 110°C au temps t=0 juste après la polymérisation et celle mesurée à 110°C au temps t=10 jours après un vieillissement à 160°C.
Avantageusement après 10 jours à 160°C, la valeur de εᵣᵤₚₜ de la composition selon l'invention mesurée à 110°C est au moins supérieure ou égale à environ 40% et de façon encore plus avantageuse après 10 jours à 160°C, la valeur de σᵣᵤₚₜ de la composition selon l'invention calculée à 110°C est au moins supérieure ou égale à environ 3MPa.

Les cyanates utilisables selon l'invention peuvent être de tout type. Il peut s'agir en particulier des monomères suivants :

| **Structure des monomères cyanates** | **nom commercial/ fournisseur/ état physique** | **propriété des monomères** | | |
|---|---|---|---|---|
| | | **Tg °C** | **% H2O** | **DK 1 MHZ** |
| 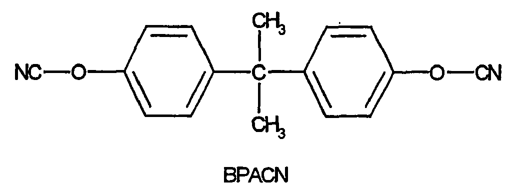 | AROCY B Ciba-Geicy BT-2000 Mitsubischi GC | 289 | 2,5 | 2,91 |
| 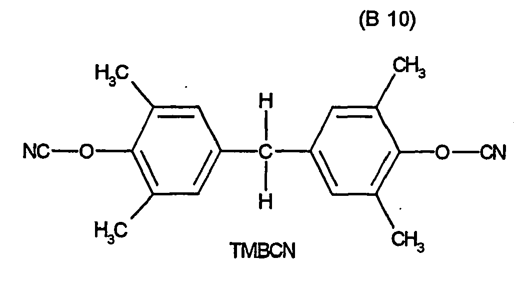 | AROCY M Ciba-Geicy CRYSTAL | 252 | 1,4 | 2,75 |

| | | | | | | |
|---|---|---|---|---|---|---|
| 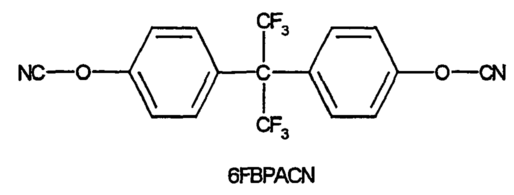 | | | AROCY F Ciba-Geicy CRYSTAL | 270 | 1,8 | 2,66 |
| 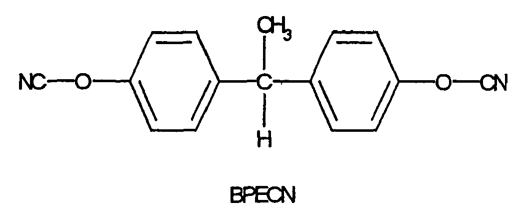 | | | AROCY L-10 Ciba-Geicy LIQUIDE | 258 | 2,4 | 2,98 |
| 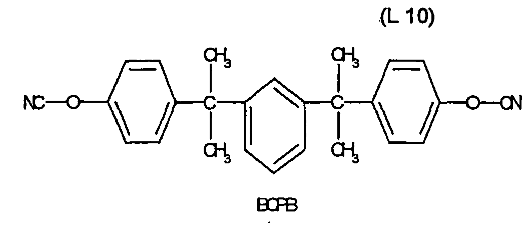 | | | RTX-366 Ciba-Geicy SEMI-SOLIDE | 192 | 0,7 | 2,64 |
| 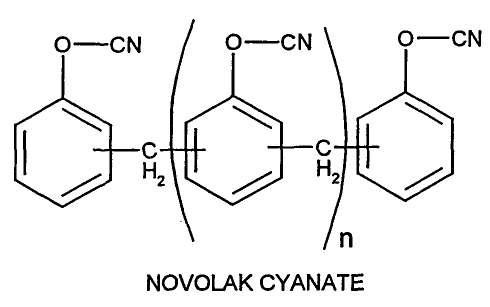 | | | PRIMASET PT Allied-signal REX-371 Ciba-Geicy SEMI-SOLIDE | 270 to 350 | 3,8 | 3,08 |
| 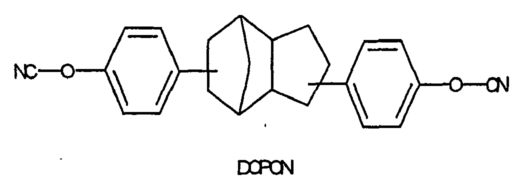 | | | XU-71787 Dow chemical SEMI-SOLIDE | 244 | 1,4 | 2,80 |

Les cyanates utilisables selon l'invention peuvent également être avancés en conversion, par homopolymérisation. II peut par exemple s'agir du B30 (cyanate B10 homopolymérisé à hauteur de 27%) ou du B50 (cyanate B10 homopolymérisé à hauteur de 44%).

Les blocs du copolymère à bloc (B) selon l'invention peuvent être :
- pour le bloc central (B1) non miscible avec le cyanate, par exemple un polydiméthylsiloxane, polybutadiène, polybutadiène hydrogéné ou polyétherfluoré,
- pour les blocs terminaux (B2) miscibles avec le cyanate, par exemple des polycaprolactones, polyesters ou polycarbonates.
Le bloc non miscible apporte le caractère élastomère voulu à la composition et les blocs externes apportent la miscibilité avec le cyanate. Avantageusement, le bloc central non miscible du copolymère (B) est du type polysiloxane. De façon encore plus avantageuse, le copolymère (B) est un copolymère polycaprolactone-polydiméthylsiloxane, de préférence le Tegomer®6440 commercialisé par la société GOLDSCHMIDT ayant les caractéristiques suivantes :

| Spécifications | Tegomer 6440 |
|---|---|
| Groupes fonctionnels | OH primaires |
| Fonctionnalité | 2 |
| Nb d'unités de répétition | n/m* = 30/18 |
| Masse molaire | 6500 ± 600 g/mol |
| Equivalent OH | 3300 g/mol |
| Point de fusion (motif PCL) | 54°C |
| Apparence | Pastilles blanches |

| | |
|---|---|
| * n représente le nombre d'unité ―Si(CH₃)₂O (diméthylsiloxane) et m le nombre d'unité ―CO(CH₂)₅O (caprolactone). | |

La présente invention concerne également un procédé de préparation d'une composition selon l'invention caractérisé en ce qu'il comprend les étapes de:
I- mélange de (A), (B), (C) et (D) jusqu'à l'obtention d'un mélange homogène à une température supérieure à la température de fusion de (A) et de (B) mais inférieure à environ 130°C
II- polymérisation du mélange à une température comprise entre environ 130 et environ 170°C,
III- post-cuisson du mélange polymérisé à une température supérieure ou égale à environ 200°C pour compléter la réaction.
En effet, l'étape I sert à mélanger de façon intime les différents composants de la composition selon l'invention. Il ne faut donc pas, lors de cette étape, que la réaction de polymérisation commence. La température appliquée doit donc être inférieure à environ 130°C.
L'étape II est l'étape de polymérisation du mélange. Cette polymérisation ne peut commencer qu'au dessus d'environ 130°C.
L'étape III quant à elle sert à compléter la réaction. Il faut appliquer une haute température afin de s'assurer qu'il ne reste pas de monomère résiduel dans la composition.

Avantageusement, les catalyseurs (D) utilisables dans le procédé selon l'invention sont activables thermiquement et/ou par irradiation UV. De façon encore plus avantageuse, ce sont des dérivés organométalliques ou des photocatalyseurs tels que [CpFe(CO)₂]₂ ou CpMn(CO)₃. De façon encore plus avantageuse, il s'agit de l'acétylacétonate de cuivre dans le nonylphénol, de préférence dans la proportion de 100 ppm.

Selon un mode de réalisation particulier de l'invention, l'étape I du procédé est conduite à environ 90°C pendant environ 6h, l'étape II à environ 170°C pendant environ 8h et l'étape III à environ 200°C pendant environ 2h. La température peut être appliquée à la composition selon l'invention de différentes manières. Elle peut l'être, en particulier, en étuve ou sous presse.

Selon un autre mode de réalisation particulier de l'invention, l'étape II du procédé est conduite sous presse à environ 170°C pendant environ 4h et l'étape III est conduite sous presse à environ 200°C pendant environ 2h.

La présente invention concerne également l'utilisation de la composition selon l'invention comme revêtement de rouleaux en particulier de machines d'impression, comme encapsulant de composants, comme supports pour micro-électronique, comme liant pour propulseurs ou pour composite.
Les exemples ci-après de composition selon l'invention sont donnés à titre de d'illustration et sans caractère limitatif.

### Exemples de préparation d'un polymère selon l'invention :

### Procédé expérimental

a) mélange des réactifs (cyanate et polyol) en pot à température supérieure à leur point de fusion (80°C) puis ajout à cette température du catalyseur et d'une partie de la charge de façon à rendre le mélange suffisamment solide pour rester sur les rouleaux de la calandre
b) mélange sur calandre à 80°C du reste de la charge
c) presse ou étuve.
Le cycle de température utilisé pour réaliser les exemples de compositions selon l'invention est de 6h à 90°C, 8h à 170°C et 2h à 200°C.
Pour chaque exemple, les proportions de chacun des constituants sont indiquées dans le tableau 1 suivant.

**Tableau 1 : Proportions introduites dans les formulations selon la proportion de silice.**

| **Exemples** | **% de silice introduit** | **Masse de Tegomer® 6440** | **Masse de cyanate B 10** | **Masse de silice Aérosil ®150** | **Masse de catalyseur** Acétyl acétonate de cuivre dans du nonylphénol |
|---|---|---|---|---|---|
| | en poids | en g | en g | en g | en g |
| 1 | 10 | 100 | 28,79 | 14,31 | 0,2998 |
| 2 | 15 | 100 | 33,62 | 23,58 | 0,35006 |
| 3 | 20 | 100 | 39,5 | 34,87 | 0,41129 |
| 4 | 27 | 100 | 50,25 | 55,57 | 0,52322 |

### Protocole expérimental du test de vieillissement à 160°C :

Les matériaux sont préparés sous forme de plaques d'environ 1 mm d'épaisseur coupées en carré de 7 cm 17 cm.
Ces plaques emballées dans du papier d'aluminium, considéré inerte vis-à-vis de la composition selon l'invention, sont placées dans une étuve dont la température est de 160°C contrôlée à ±2°C.
Chaque plaque est sortie de l'étuve au bout d'un temps précis (0, 6, 7, 24, 72 heures, 5, 9 ou 10 jours).
Après avoir subi le test du vieillissement, cinq éprouvettes de traction type H3 normalisées (norme AFNOR T51-034) sont découpées à l'emporte-pièce dans cette plaque.
Les propriétés mécaniques statiques selon la norme AFNOR T51-034 sont ensuite évaluées grâce à une machine de traction de type J.J. Lloyd MK30 à une vitesse de 50 mm/min, dans une chambre d'ambiance régulée à ± 1 °C soit à température ambiante, soit à 110°C selon le domaine de températures sur lequel s'étend le plateau caoutchoutique des matériaux testés.
Pour chaque exemple et pour d'autres matériaux servant de comparaison, les résultats des tests sont indiqués dans les tableaux 2 à 5 suivants :

**Tableau 2 : Evolution de la valeur de la contrainte à la rupture σ en MPa mesurée à 110 °C en fonction du temps de vieillissement à 160°C.**

| **Temps (h)** | **EX 1** | **EX 2** | **EX 3** | **EX 4** | **Viton®** | **Shin Etsu® KE24** |
|---|---|---|---|---|---|---|
| **0** | 2,615 | 3,02241 | 3,4615 | 3,74138 | 5,009 | 4,57194 |
| **24** | 2,15267 | 2,467 | 3,58167 | 4,755 | 4,80425 | 3,1966 |
| **72** | 1,74633 | 2,08 | 3,69725 | 3,82767 | 4,94525 | 3,62825 |
| **120** | 1,73967 | 2,256 | 3,385 | 3,8396 | 5,35475 | 2,78375 |
| **216 à 240** | 1,342 | 1,852 | 3,2 | 3,62833 | 5,6755 | 3,2272 |

**Tableau 3 : Evolution de la valeur de l'allongement à la rupture ε en % mesurée à 110°C en fonction du temps de vieillissement à 160°C.**

| **Temps (h)** | **EX 1** | **EX 2** | **EX 3** | **EX 4** | **Viton®** | **Shin Etsu® KE24** |
|---|---|---|---|---|---|---|
| **0** | 110,818 | 63,285 | 42,3425 | 41,1244 | 116,35 | 44,8475 |
| **24** | 169,533 | 96,775 | 71,3567 | 41,5133 | 101,383 | 43,52 |
| **72** | 168,6 | 103,903 | 86,055 | 57,34 | 101,728 | 40,1625 |
| **122** | 154,775 | 117,5 | 86,5625 | 59,042 | 99,3525 | 35,8675 |
| **216** | 117,20 | 67,185 | 75,395 | 45,2067 | 105 | 41,1375 |

Les valeurs des variations de σᵣᵤₚₜ et εᵣᵤₚₜ calculées à 110°C pour chaque exemple et pour d'autres matériaux au cours du test de vieillissement à 160°C sont rassemblées dans le tableau 4.

**Tableau 4 : Variations des propriétés mécaniques à la rupture mesurées à 110°C au cours de test de vieillissement à 160°C (entre 0 et 10 jours).**

| | Ex 1 | Ex 2 | Ex 3 | Ex 4 | Viton® | Shin Etsu® KE 24 | Adilithe® IV-95 |
|---|---|---|---|---|---|---|---|
| Δσᵣᵤₚₜ(%) | | | | | | | |
| Entre 0 et 24 heures | -17,6 | -18,38 | 3,5 | 27,1 | -4,09 | -30,1 | -46,97 |
| Entre 0 et 10 jours | -37,21 | -38,72 | -7,55 | -3,02 | 13,31 | -28,32 | -77,75 |
| Entre 24h et 10 jours | -23,72 | -24,93 | -10,66 | -23,7 | 18,14 | 2,52 | -58,04 |
| Δεᵣᵤₚₜ(%) | | | | | | | |
| Entre 0 et 24 h | 53 | 52,92 | 68,52 | 1 | -12,86 | -2,96 | -12,97 |
| Entre 0 et 10 jours | 5,76 | 6,16 | 78,06 | 9,93 | -9,75 | -8,27 | -87,28 |
| Entre 24h et 10 jours | -30,87 | -30,57 | 5,66 | 8,89 | 3,57 | -5,47 | -84,25 |

Les valeurs négatives expriment la diminution de la propriété et les valeurs positives l'augmentation de cette propriété.

**Tableau 5 : Valeur des variations de de σrupt et εrupt calculée à 110°C pour le polyuréthane-urée à base de polyol C36 au cours du test de vieillissement à 160°C.**

| | C36/H12MDI/3-DCM (D2000/T5000) |
|---|---|
| Δσᵣᵤₚₜ(%) | |
| Entre 0 et 24 h | -53,38 |
| Entre 0 et 3 jours | -62,23 |
| Entre 24h et 3 jours | -18,98 |
| Δεᵣᵤₚₜ(%) | |
| Entre 0 et 24 h | -72,28 |
| Entre 0 et 3 jours | -92,12 |
| Entre 24h et 3 jours | -71,6 |

**Tableau 6 : Valeurs moyennes des écarts sur la contrainte et la déformation à la rupture calculées sur les exemples 1 à 4 selon l'invention.**

| Valeur moyenne | Δσᵣᵤₚₜ(%) | Δεᵣᵤₚₜ(%) |
|---|---|---|
| Entre 0 et 10 jours | -22% | 25% |
| Entre 24h et 10 jours | -20,75% | -11,80% |

Ces résultats mettent bien en évidence la stabilité thermique au cours du test de vieillissement à 160°C des compositions selon l'invention.
Plus la teneur en silice est élevée, plus la contrainte à la rupture augmente et l'allongement à la rupture diminue.
En comparaison avec d'autres matériaux stables thermiquement (silicones Shin Etsu^{®}KE 24 et viton^{®}), il apparaît que les compositions selon l'invention contenant 20% ou 27% de silice sont dans la fourchette de valeurs de ces matériaux.
La composition selon l'invention contenant 15% de silice offre tout de même un bon allongement à la rupture malgré une contrainte à la rupture plus faible. Les compositions selon l'invention sont donc stables thermiquement.

D'après les valeurs moyennes des écarts sur les propriétés mécaniques statiques calculées sur les exemples selon l'invention, il apparaît qu'elles ont toute une variation inférieure ou égale à ± 30% sur la contrainte et sur la déformation (entre 0 et 10 jours ou entre 1 et 10 jours). On est loin des écarts obtenus avec le polyuréthanne-urée type C36/H12MDI/3-DCM (D2000/T5000) ou le polyuréthanne type l'Adilithe® IV-95 commercialisé par la société SAMI, matériaux non stables thermiquement.

### Exemple de mise en oeuvre d'un rouleau avec la composition de l'exemple 4 selon l'invention.

1. Mélange en pot d'une partie des réactifs (Tegomer®6440+B10+catalyseur) à environ 80°C quelques minutes, le temps que les monomères fondent
2. calandrage à environ 80°C du mélange précédent auquel on rajoute progressivement le reste de la charge.
3. le mélange obtenu avec la calandre est ensuite passé dans une extrudeuse monovis à filière plate (80°C environ) située face à un enrouleur sur lequel est fixé le rouleau à enduire (le rouleau est maintenu suffisamment chaud pour que la matière ne recristallise pas). Les vitesses respectives sont réglées pour que la bande de matière s'enroule régulièrement sans se déchirer.
4. le rouleau enduit est ensuite placé en étuve pour le cycle thermique complet de 6h à 90°C, 8h à 170°C et 2h à 200°C.

On obtient ainsi un rouleau enduit de la composition selon l'invention et donc stable thermiquement au niveau des propriétés statiques mécaniques.

La composition selon l'invention a donc une grande facilité de mise en oeuvre.

## Revendications

1. Composition élastomère thermodurcissable à base de polycyanurate modifié à tenue thermique améliorée, **caractérisée en ce qu'**elle est susceptible d'être obtenue par un procédé de polymérisation en présence d'un catalyseur (D) d'un mélange comprenant au moins :
(A) un cyanate,
(B) un copolymère bloc constitué par
- a) au moins un bloc (B1) central non miscible avec le cyanate et ayant une masse molaire en nombre Mn d'au moins 1000 g/mol
- b) au moins deux blocs terminaux (B2) situés de chaque côté du bloc central et comportant des groupes réactifs avec le cyanate, chacun des blocs (B2) ayant une masse molaire en nombre Mn d'au moins 500 g/mol
(C) une charge minérale réactive avec le cyanate
dans des proportions telles que le rapport r, représentant le rapport du nombre de groupes OCN présents dans la composition de départ avant réaction par le nombre de groupes réactifs avec le cyanate présents dans la composition de départ avant réaction, soit au moins égal à 5, mais reste inférieur à une valeur limite pour éviter l'inversion de phase
ledit procédé comprenant les étapes de :
I- mélange de (A), (B), (C) et (D) jusqu'à l'obtention d'un mélange homogène à une température supérieure à la température de fusion de (A) et de (B) mais inférieure à 130°C
II- polymérisation du mélange à une température comprise entre 130 et 170°C,
III- post-cuisson du mélange polymérisé à une température supérieure ou égale à 200°C pour compléter la réaction
et **en ce que** les valeurs de Δσᵣᵤₚₜ, représentant la mesure de la variation entre la valeur de la contrainte à la rupture mesurée à 110°C au temps t = 0 juste après polymérisation et celle mesurée à 110°C au temps t = 10 jours après un vieillissement à 160°C, et de Δεᵣᵤₚₜ, représentant la mesure de la variation entre la valeur de l'allongement à la rupture mesurée à 110°C au temps t = 0 juste après polymérisation et celle mesurée à 110°C au temps t = 10 jours après un vieillissement à 160°C, de la composition ainsi obtenue sont inférieures ou égales à ±30%.

2. Composition selon la revendication 1, **caractérisée en ce qu'**après 10 jours à 160°C la valeur de son εᵣᵤₚₜ mesuré à 110°C est au moins égal à 40%.

3. Composition selon l'une quelconque des revendications précédentes, **caractérisée en ce qu'**après 10 jours à 160°C la valeur de son σᵣᵤₚₜ mesurée à 110°C est au moins égal à 3MPa.

4. Composition selon l'une quelconque des revendications précédentes, **caractérisée en ce que** le bloc (B1) du copolymère (B) est du type polysiloxane.

5. Composition selon l'une quelconque des revendications précédentes, **caractérisée en ce que** le copolymère (B) est un copolymère polycaprolactone-polydiméthylsiloxane.

6. Composition selon l'une quelconque des revendications précédentes, **caractérisée en ce que** la charge (C) est de la silice fonctionnalisée hydroxyle.

7. Procédé de préparation d'une composition selon l'une quelconque des revendications 1 à 6, **caractérisé en ce qu'**il comprend les étapes de :
I- mélange de (A), (B), (C) et (D) jusqu'à l'obtention d'un mélange homogène à une température supérieure à la température de fusion de (A) et de (B) mais inférieure à 130°C
II- polymérisation du mélange à une température comprise entre 130 et 170°C,
III- post-cuisson du mélangé polymérisé à une température supérieure ou égale à 200°C pour compléter la réaction.

8. Procédé selon la revendications 7, **caractérisé en ce que** le catalyseur (D) utilisé est de l'acétylacétonate de cuivre dans le nonylphénol.

9. Procédé selon l'une quelconque des revendications 7 et 8, **caractérisé en ce que** l'étape I est conduite à environ 90°C pendant environ 6h, l'étape II à environ 170°C pendant environ 8h et l'étape III à environ 200°C pendant environ 2h.

10. Procédé selon l'une quelconque des revendications 7 et 8, **caractérisé en ce que** l'étape II est conduite sous presse à environ 170°C pendant environ 4h et l'étape III est conduite sous presse à environ 200°C pendant environ 2h.

11. Utilisation de la composition selon l'une quelconque des revendications 1 à 6, comme revêtement de rouleaux.

12. Utilisation selon la revendication 11 **caractérisée en ce que** les rouleaux sont des rouleaux de machines d'impression.

13. Utilisation de la composition selon l'une quelconque des revendications 1 à 6 comme encapsulant de semi-conducteurs.

14. Utilisation de la composition selon l'une quelconque des revendications 1 à 6 comme supports pour micro-électronique.

15. Utilisation de la composition selon l'une quelconque des revendications 1 à 6 comme liant pour propulseurs ou pour composite.

## Claims

1. Thermosetting elastomer composition based on modified polycyanurate with improved heat resistance, **characterized in that** it is obtainable by a process of polymerizing, in the presence of a catalyst (D), a mixture comprising at least:
(A) a cyanate,
(B) a block copolymer composed of
- a) at least one central block (B1) which is not miscible with the cyanate and which has a numerical molar mass Mn of at least 1000 g/mol, and
- b) at least two end blocks (B2) situated either side of the central block and containing groups which are reactive with the cyanate, each of the blocks (B2) having a numerical molar mass Mn of at least 500 g/mol, and
(C) a mineral filler which is reactive with the cyanate in proportions such that the ratio r, which represents the ratio of the number of OCN groups present in the starting composition before reaction to the number of groups which are reactive with the cyanate that are present in the starting composition before reaction, is at least 5, but remains below a limit value to prevent phase inversion,
said process comprising the steps of:
I- mixing (A), (B), (C) and (D) to give a homogeneous mixture at a temperature greater than the melting temperature of (A) and (B) but less than 130°C,
II- polymerizing the mixture at a temperature of between 130 and 170°C,
III- postcuring the polymerized mixture at a temperature greater than or equal to 200°C, in order to complete the reaction
and **in that** the Δσᵣᵤₚₜ values, which represent the measurement of the variation between the stress at break measured at 110°C at time t = 0 just after polymerization and that measured at 110°C at time t = 10 days after aging at 160°C, and the Δεᵣᵤₚₜ values, which represent the measurement of the variation between the elongation at break measured at 110°C at time t = 0 just after polymerization and that measured at 110°C at time t = 10 days after aging at 160°C, of the composition thus obtained are less than or equal to ± 30%.

2. Composition according to Claim 1, **characterized in that** after 10 days at 160°C its εᵣᵤₚₜ measured at 110°C is at least equal to 40%.

3. Composition according to either of the preceding claims, **characterized in that** after 10 days at 160°C its σᵣᵤₚₜ measured at 110°C is at least equal to 3 MPa.

4. Composition according to any one of the preceding claims, **characterized in that** the block (B1) of the copolymer (B) is of the polysiloxane type.

5. Composition according to any one of the preceding claims, **characterized in that** the copolymer (B) is a polycaprolactone-polydimethylsiloxane copolymer.

6. Composition according to any one of the preceding claims, **characterized in that** the filler (C) is hydroxyl-functionalized silica.

7. Process for preparing a composition according to any one of Claims 1 to 6, **characterized in that** it comprises the steps of:
I- mixing (A), (B), (C) and (D) to give a homogeneous mixture at a temperature greater than the melting temperature of (A) and (B) but less than 130°C,
II- polymerizing the mixture at a temperature of between 130 and 170°C,
III- postcuring the polymerized mixture at a temperature greater than or equal to 200°C, in order to complete the reaction.

8. Process according to Claim 7, **characterized in that** the catalyst (D) used is copper acetylacetonate in nonylphenol.

9. Process according to either of Claims 7 and 8, **characterized in that** step I is conducted at approximately 90°C for approximately 6 h, step II at approximately 170°C for approximately 8 h, and step III at approximately 200°C for approximately 2 h.

10. Process according to either of Claims 7 and 8, **characterized in that** step II is conducted in a press at approximately 170°C for approximately 4 h and step III is conducted in a press at approximately 200°C for approximately 2 h.

11. Use of the composition according to any one of Claims 1 to 6 as a coating for rollers.

12. Use according to Claim 11, **characterized in that** the rollers are rollers of printing machines.

13. Use of the composition according to any one of Claims 1 to 6 as an encapsulant for semiconductors.

14. Use of the composition according to any one of Claims 1 to 6 as substrates for microelectronics.

15. Use of the composition according to any one of Claims 1 to 6 as a binder for propellants or for composites.

## Patentansprüche

1. Warmhärtende Elastomer-Zusammensetzung auf der Basis von modifiziertem Polycyanurat mit verbesserter Wärmestabilität, **dadurch gekennzeichnet, dass** sie erhalten werden kann durch ein Polymerisationsverfahren in Gegenwart eines Katalysators (D) aus einer Mischung, umfassend wenigstens:
(A) ein Cyanat,
(B) ein Block-Copolymer, gebildet aus
- a) wenigstens einem zentralen Block (B1), welcher mit dem Cyanat nicht mischbar ist und ein Molekulargewicht-Zahlenmittel Mn von wenigstens 1000 g/mol aufweist;
- b) wenigstens zwei terminalen Blöcken (B2), die sich auf jeder Seite des zentralen Blocks befinden und mit dem Cyanat reaktive Gruppen umfassen, wobei jeder der Blöcke (B2) ein Molekulargewicht-Zahlenmittel Mn von wenigstens 500 g/mol aufweist,
(C) einen mit dem Cyanat reaktiven anorganischen Füllstoff
in solchen Anteilen, dass das Verhältnis r, welches das Verhältnis der Anzahl von in der Ausgangszusammensetzung vor der Reaktion vorhandenen OCN-Gruppen zu der Anzahl von mit dem Cyanat reaktiven Gruppen, die in der Ausgangszusammensetzung vor der Reaktion vorhanden sind, darstellt, wenigstens gleich 5 ist, aber unter einem Grenzwert, um die Phasenumkehr zu vermeiden, bleibt,
wobei das Verfahren die Schritte umfasst:
I - Mischen von (A), (B), (C) und (D) bis zur Erzielung einer homogenen Mischung bei einer Temperatur über der Schmelztemperatur von (A) und von (B), aber unter 130°C,
II - Polymerisation der Mischung bei einer Temperatur zwischen 130 und 170°C,
III - Nachhärtung der polymerisierten Mischung bei einer Temperatur über oder gleich 200°C, um die Reaktion zu vervollständigen,
und dadurch, dass die Werte von Δσᵣᵤₚₜ, welches den Messwert der Veränderung zwischen dem Wert der bei 110°C zum Zeitpunkt t = 0 unmittelbar nach der Polymerisation gemessenen Bruchspannung und demjenigen, der bei 110°C zum Zeitpunkt t = 10 Tage nach einer Alterung bei 160°C gemessen wird, darstellt, und von Δεᵣᵤₚₜ, welches den Messwert der Veränderung zwischen dem Wert der bei 110°C zum Zeitpunkt t = 0 unmittelbar nach der Polymerisation gemessenen Bruchdehnung und demjenigen, die bei 110°C zum Zeitpunkt t = 10 Tage nach einer Alterung bei 160°C gemessen wird, darstellt, der so erhaltenen Zusammensetzung unter oder gleich ±30% sind.

2. Zusammensetzung nach Anspruch 1, **dadurch gekennzeichnet, dass** nach 10 Tagen bei 160°C der Wert von deren εᵣᵤₚₜ, gemessen bei 110°C, wenigstens gleich 40% beträgt.

3. Zusammensetzung nach einem der vorangegangenen Ansprüche, **dadurch gekennzeichnet, dass** nach 10 Tagen bei 160°C der Wert von deren σᵣᵤₚₜ, gemessen bei 110°C, wenigstens 3 MPa beträgt.

4. Zusammensetzung nach einem der vorangegangenen Ansprüche, **dadurch gekennzeichnet, dass** der Block (B1) des Copolymers (B) vom Polysiloxan-Typ ist.

5. Zusammensetzung nach einem der vorangegangenen Ansprüche, **dadurch gekennzeichnet, dass** das Copolymer (B) ein Polycaprolacton-Polydimethylsiloxan-Copolymer ist.

6. Zusammensetzung nach einem der vorangegangenen Ansprüche, **dadurch gekennzeichnet, dass** der Füllstoff (C) mit Hydroxylgruppen funktionalisiertes Siliciumdioxid ist.

7. Verfahren zur Herstellung einer Zusammensetzung nach einem der Ansprüche 1 bis 6, **dadurch gekennzeichnet, dass** es die Schritte umfasst:
I - Mischen von (A), (B), (C) und (D) bis zur Erzielung einer homogenen Mischung bei einer Temperatur über der Schmelztemperatur von (A) und von (B), aber unter 130°C,
II - Polymerisation der Mischung bei einer Temperatur zwischen 130 und 170°C,
III - Nachhärtung der polymerisierten Mischung bei einer Temperatur über oder gleich 200°C, um die Reaktion zu vervollständigen.

8. Verfahren nach Anspruch 7, **dadurch gekennzeichnet, dass** der eingesetzte Katalysator (D) Kupferacetylacetonat in Nonylphenol ist.

9. Verfahren nach einem der Ansprüche 7 und 8, **dadurch gekennzeichnet, dass** der Schritt I bei ungefähr 90°C während ungefähr 6 h, der Schritt II bei ungefähr 170°C während ungefähr 8 h und der Schritt III bei ungefähr 200°C während ungefähr 2 h ausgeführt wird.

10. Verfahren nach einem der Ansprüche 7 und 8, **dadurch gekennzeichnet, dass** der Schritt II unter einer Presse bei ungefähr 170°C während ungefähr 4 h ausgeführt wird und der Schritt III unter einer Presse bei ungefähr 200°C während ungefähr 2 h ausgeführt wird.

11. Verwendung der Zusammensetzung nach einem der Ansprüche 1 bis 6 als Überzug von Walzen.

12. Verwendung nach Anspruch 11, **dadurch gekennzeichnet, dass** die Walzen Walzen von Druckmaschinen sind.

13. Verwendung der Zusammensetzung nach einem der Ansprüche 1 bis 6 als Einkapselungsmittel von Halbleitern.

14. Verwendung der Zusammensetzung nach einem der Ansprüche 1 bis 6 als Träger für die Mikroelektronik.

15. Verwendung der Zusammensetzung nach einem der Ansprüche 1 bis 6 als Bindemittel für Treibstoffe oder für Verbundstoffe.
